# EUROPEAN PATENT SPECIFICATION

(11) **EP 2 846 571 B1**
(45) Date of publication and mention of the grant of the patent: **02.05.2018**
(21) Application number: 13306229.9
(22) Date of filing: 09.09.2013
(51) Int. Cl.: H04W 16/18, H04W 24/02, H04W 24/06, H04W 84/00

(54) **Apparatus, Mobile Device, Method and Computer Program for Determining a Location of a Base Station Transceiver**
Vorrichtung, mobile Vorrichtung, Verfahren und Computerprogramm zur Bestimmung des Standortes eines Basisstation-Sender-Empfängers
Appareil, dispositif mobile, procédé et programme informatique pour déterminer un emplacement d'un émetteur-récepteur de station de base

(43) Date of publication of application: 11.03.2015
(73) Proprietor: Alcatel Lucent, 91620 Nozay (FR)
(72) Inventor: Ewe, Lutz, 70435 Stuttgart (DE); Klein, Siegfried, 70435 Stuttgart (DE); Gloss, Bernd, 70435 Stuttgart (DE); Schreiber, Gerhard, 70435 Stuttgart (DE); Bakker, Hajo, 70435 Stuttgart (DE); Karla, Ingo, 70435 Stuttgart (DE); Blume, Oliver, 70435 Stuttgart (DE)
(74) Representative: Wetzel, Emmanuelle

(56) References cited:
- EP-A1- 2 437 540
- EP-A1- 2 496 028
- WO-A1-96/35305
- WO-A2-98/30033
- WO-A2-98/44748
- WO-A2-02/060206
- US-A1- 2003 087 635
- US-A1- 2004 203 855
- US-A1- 2010 150 027

## Description

### Technical Field

Embodiments relate to an apparatus, a mobile device, a method and a computer program for determining a location of a base station transceiver, and more particularly, but not exclusively tracing a mobile base station transceiver and handover requests to identify a promising location for base station deployment.

### Background

This section introduces aspects that may be helpful in facilitating a better understanding of the inventions. Accordingly, the statements of this section are to be read in this light and are not to be understood as admissions about what is in the prior art or what is not in the prior art.

Cellular wireless communication systems are based on a plurality of cellular coverage areas, which are generated by interconnected base station transceivers. Mobile transceivers make use of wireless services provided by a network and move through the cellular structure. Mobile transceivers carry out measurements on radio signals transmitted by the serving and neighboring base station transceivers, based on which the mobile transceivers are assigned to the cells of the network, handed over between neighboring cells of the network, respectively. The size of a cell and the number of mobile transceivers, which can be served, may depend on the strength or quality of the respective radio signals. The capacity of each cell, in terms of data rate or number of mobile transceivers, which can be served, depends on system parameters and specifications, such as bandwidth, maximum or minimum data rates per mobile transceiver, etc. The number of served mobile transceivers determines the traffic demand, e.g. in a downtown area the density of mobile transceivers may be higher than in a rural area. The traffic demand may also depend on multiple further factors, such as business and rush hours, occurrence of events like mass events, characteristics of traffic demands, service mix, etc.

Additional base station transceiver or cell deployment may enhance the capacity of a cellular network. Locations for new base station transceiver deployment may be evaluated using computer simulations and measurement campaigns.

Document WO 98/44748 describes a concept for measuring a traffic volume in a telephone system. Document US 2003/0087635 describes a concept for collecting data at a switch of a mobile telephone switching office.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections. The invention is defined by the independent claims. Further embodiments are defined by the dependent claims. Various embodiments provide an apparatus, a mobile device, a method and a computer program operable to determine location information of a base station transceiver. In particularly, determining the location of a base station transceiver may enable to move the base station transceiver to different locations in a communication network and measure information relating to capacity enhancements of the communication network achievable by the base station transceiver. For example, the number of handover attempts or requests generated by mobile transceivers in the coverage of the base station transceiver may serve as information for such a capacity enhancement. Storing the location of the base station transceiver may then allow determining a location with a high or promising capacity enhancement among a plurality of locations the base station transceiver has been moved to. Embodiments provide an apparatus for a base station transceiver, which is operable to determine location information of the base station transceiver. The base station transceiver is operable to provide information related to an identification of a cell to a mobile transceiver. The apparatus comprises a positioning module, which is operable to provide information related to a location of the apparatus and the apparatus comprises a storing module, which is operable to store data. The apparatus further comprises a control module, which is operable to store a data set using the storing module. The data set comprises information related to the location of the apparatus from the positioning module and information related to a time, at which the information related to the position of the apparatus is obtained.

In embodiments promising locations of the base station transceiver may be identified comparing a time of increased handover demand to the location of the base station transceiver at that time using the stored data sets.

In some embodiments the base station transceiver may correspond to a dummy base station transceiver. The base station transceiver may only provide control signaling for a mobile transceiver to measure a signal quality of the base station transceiver and determine the identification of the base station transceiver. The base station transceiver may provide just enough control signaling for the mobile transceiver to request a handover and may, in some embodiments, not need any backhaul connection to the communication network. Embodiments may enable a cost efficient evaluation of locations for base station deployment as a base station transceiver with reduced or even minimal functionality may be used.

In some embodiments the control module may be operable to determine information related to a velocity of the base station transceiver and the control module may be operable to control a transmit power of the base station transceiver based on the information related to the velocity of the base station transceiver. Embodiments may enable reliable handover measurements although the base station transceiver moves at a higher velocity.

In some embodiments the control module may be operable to activate and deactivate transmission of the base station transceiver based on the information related to the location of the base station transceiver. Embodiments may disable transmission of the base station transceiver when it moves to a region, which can be precluded for new base station deployment in advance. Interference generated by the base station transceiver may therefore be reduced or eliminated in such regions. In some embodiments the control module may also be operable to activate and deactivate transmission of the base station transceiver based on the time of day or day of week information. Embodiments may disable transmission of the base station transceiver for known periods of time of low mobile transceiver activity in order to save battery power.

Embodiments further provide a mobile device comprising the above described apparatus. Embodiments may enable automated regional coverage by moving the base station transceiver together with a mobile device, such as a vehicle.

Embodiments further provide a method for a base station transceiver and for determining location information of the base station transceiver. The base station transceiver provides information related to an identification of a cell to a mobile transceiver. The method comprises providing information related to a location of the base station transceiver. The method further comprises storing the information related to the location of the base station transceiver together with information related to a time, at which the information related to the position is obtained.

The method may further comprise operating the base station transceiver at different locations and storing information related to handover requests from mobile transceivers requesting to handover to the base station transceiver together with information related to a time at which the information related to a handover request was obtained. Embodiments may enable to determine promising base station deployment locations by correlating locations of the base station transceiver and a number of handover requests based on the information relating to time.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates an embodiment of an apparatus for a base station transceiver in or attached to a vehicle;
Fig. 2 illustrates an embodiment attached to a bus in a network scenario;
Fig. 3 illustrates a message sequence chart in an embodiment;
Fig. 4 illustrates a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of apparatuses for base station transceivers will be described. These base station transceivers may be part of a cellular or mobile communication system. In mobile communication networks heterogeneous architectures may be used. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition. Small cells are cells having a smaller coverage area than macro cells. In some network scenarios the small cells' coverage area can be surrounded by the coverage area of a macro cell. Small cells may be deployed to extend the capacity of a network.

In the following embodiments of apparatuses, methods and computer programs will be described. The apparatuses, method, or computer programs may be adapted to or configured for a mobile communication system, which may, for example, correspond to one of the 3GPP-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11,generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and the base station transceiver can be located in or adjacent to a coverage area of another base station transceiver, e.g. a macro cell base station transceiver or a Closed Subscriber Group (CSG) base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smart phone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base transceiver Station (BTS), an access point, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. CSG and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be at least partly surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or a gate section at an airport, i.e. its coverage area may have a diameter below 50m. Thus, a base station transceiver may also be referred to as cell.

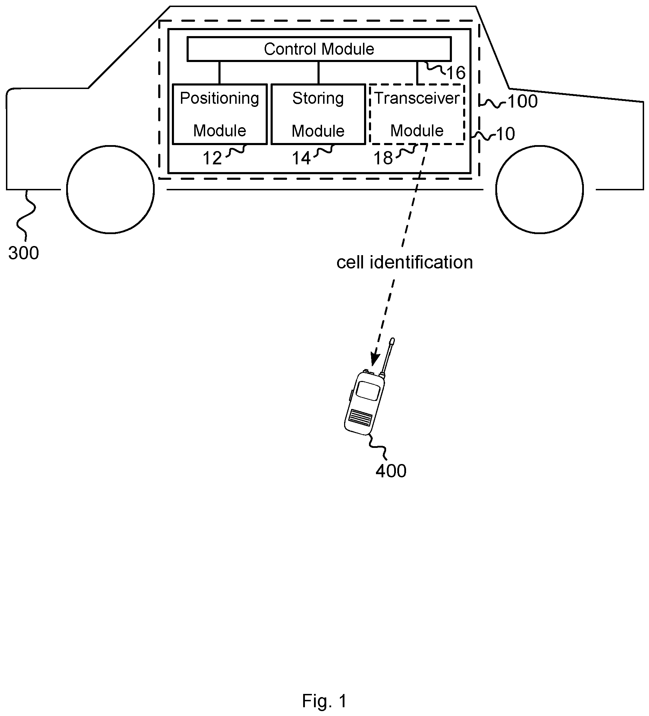

Fig. 1 illustrates an embodiment of an apparatus 10 for a base station transceiver 100. The apparatus 10 is operable to determine location information of the base station transceiver 100. In other words, the apparatus 10 may be adapted to or operable in a base station transceiver 100; it may be operated by or comprised in a base station transceiver 100. Embodiments may also provide a base station transceiver 100 comprising the apparatus 10. Fig. 1 further shows an embodiment (dashed lines) of a base station transceiver 100 comprising the apparatus 10. The base station transceiver 100 is operable to provide information related to an identification of a cell to a mobile transceiver 400, which is also illustrated in Fix. 1. The apparatus 10 comprises a positioning module 12, which is operable to provide information related to a location of the apparatus 10.

The positioning module 12 may correspond to any means for positioning, one or more positioning units, one or more positioning devices etc. For example, the positioning module may comprise a receiver module, unit, or device operable to receive signals from a satellite based positioning system such as the Global Positioning System (GPS). In some embodiments such a GPS component may be used for multiple purposes in the apparatus 10, the base station transceiver 100, respectively. For example, a GPS module may be used for synchronization purposes such as time aligning transmit signals of base station transceivers, e.g. a synchronization channel. Generally, the positioning module 12 may be operable to determine any information based on which a position or location of the apparatus 10 can be determined, the base station transceiver respectively.

The apparatus 10 further comprises a storing module 14, which is operable to store data. The storing module 14 may correspond to any means for storing, one or more storing units, one or more positioning devices etc. For example, the storing module 14 may correspond to or comprise any memory, such as non-volatile memory, flash memory, a hard-disk, etc. The apparatus 10 further comprises a control module 16, which is operable to store a data set using the storing module 12. The control module 16 is coupled to the positioning module 12 and to the storing module 14. The control module 16 may correspond to one or more control units, one or more control devices, or any means for controlling. In some embodiments the control module 16 may be implemented in software, which is executable on accordingly adapted hardware, such as a processor, a Digital Signal Processor (DSP), a multi-purpose processor, or the like. In embodiments the data set comprises information related to the location of the apparatus 10 from the positioning module 12 and information related to a time, at which the information related to the position of the apparatus 10 is obtained. In some embodiments the positioning module 12 may be operable to determine information related to a time together with the information related to the location of the apparatus 10. In some embodiments the control module 16 may be operable to track time, e.g. by using an accordingly adapted timer module.

Fig. 1 further illustrates an embodiment of a mobile device 300, exemplified as a car, which comprises the base station transceiver 100 and the apparatus 10.

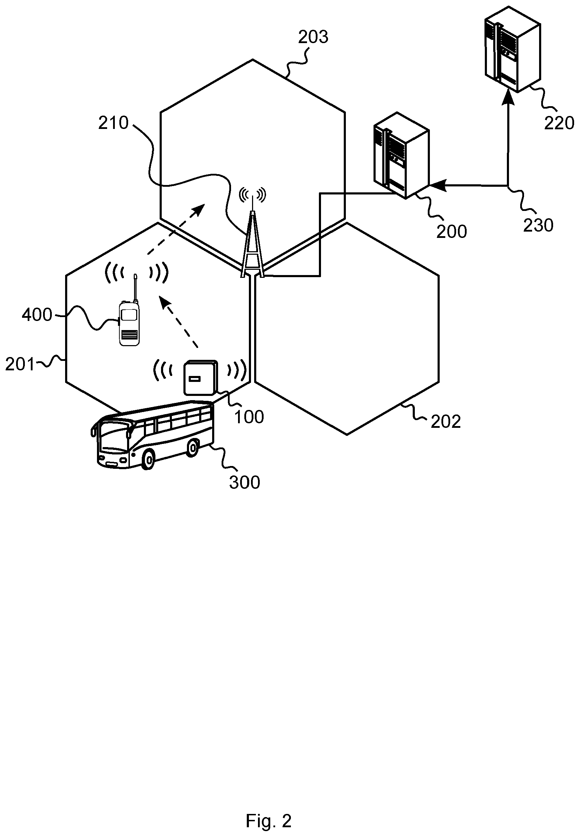

In the following it is assumed that an operator runs a widespread LTE macro cell network. Additional growth in capacity as well as removal of still existing coverage holes may be promised by deployment of one or more LTE pico cells in the serving area of the macro cells. Embodiments may ease the determination of economical and (in relation to radio reception conditions) promising locations for such pico radio cells. Hence, in some embodiments the cell generated by the base station transceiver 100 may correspond to a small cell, such as pico cell. The base station transceiver 100 may comprise a coverage area, which is at least partly surrounded by a coverage area of a macro cell base station transceiver 200, which will be further detailed using Fig. 2 in the sequel. The control module 16 may be operable to record traces of time and corresponding positions of the base station transceiver 100. It is to be noted that in other embodiments the base station transceiver 100 may generate one or more cell of different sizes, e.g. one or more macro cells.

Embodiments may provide more efficient radio network planning. Considering an amount of pico cells to be deployed in a macro cellular structure, embodiments may reduce efforts of radio measurement campaigns ("drive tests") as well as economical and logistic requirements.

Embodiments may make use of a "dummy" base station transceiver 100, e.g. a "dummy" pico cell. That is to say in some embodiments the apparatus 10 further comprises a transmitter module 18 as shown in Fig.1, which may also be coupled to the control module 16. The transmitter module 18 may correspond to one or more transmitter devices, one or more transmitter units, or any means for transmitting. The transmitter module 18 may therefore comprise typical transmitter components, such as one or more antennas, filter or filter circuitry, an amplifier such as a Power Amplifier (PA), conversion circuitry for converting a base band signal to a Radio Frequency (RF) signal, an analog/digital converter, or signal processing capability such as a Digital Signal Processor (DSP). In some embodiments the transmitter module 18 is operable to transmit at least one control signal, such as a reference or pilot signal, to enable the mobile transceiver 400 to carry out signal quality measurements on the reference signal. The transceiver module 18 is further operable to transmit a signal with information related to the above mentioned identification of the cell. In some embodiments the transceiver module 18 may further transmit synchronization channels or signals to enable the mobile transceiver 400 to synchronize to the signals transmitted by the base station transceiver apparatus 10. In some embodiments the transceiver module 18 may be operable to transmit at least some system information to enable the mobile transceiver to identify the base station transceiver 100 and to carry out respective measurements.

In some embodiments the transceiver module 18 may transmit just enough information for the mobile transceiver 400 to carry out measurements and report measurements results to another base station transceiver the mobile is associated with, e.g. in terms of handover measurements. The handover measurements may then be used to determine performance information for the base station transceiver 100 at the respective location if it was permanently deployed and fully operational. In embodiments the base station transceiver 100 may not be fully operational; therefore it may also be referred to as "dummy", "pseudo", or "fake" base station transceiver. In some embodiments the transmitter module 18 may be inoperable to transmit payload data. The base station transceiver 100 may correspond to a dummy base station transceiver, which may be inoperable to receive or detect payload data.

The base station transceiver 100 may serve no mobiles, but it may broadcast only a dedicated cell identification (ID), e.g. a Physical Cell Identification (PCI), e.g. by means pilot signals. For example, such a dummy pico cell or base station transceiver 100 may be temporarily mounted at a promising location, in some embodiments with no need for a backhaul attachment to an actual radio network (e.g. an LTE network) or even a power line. That is to say, the base station transceiver may be battery powered in some embodiments. During a measurement period in surrounding macro cell(s), where handover (HO) attempts to that dummy pico cell may be recorded, findings may be obtained for a decision either to deploy a real pico cell deployment at that promising location or not. Embodiments may enhance the efficiency of such a method as the base station transceiver 100 is mobile and may move to different locations with a mobile device 300. Promising locations may not be identified before, but determined or detected based on the data sets. Moreover, a period of a temporary mount and measurement time may not be predetermined.

In some embodiments vehicles of existing civil infrastructure suppliers may be equipped with the apparatus 10, the base station transceiver 100, respectively. The mobile device 300 may correspond to a vehicle, which may be operated by a civil infrastructure supplier. Such a vehicle may correspond to a public bus, a taxi or cab, a postal/parcel service van or truck, a vehicle of waste disposal, a train, an urban or suburban commuter railway train, an underground or subway, a tram or cable car, a car of a car sharing fleet, etc. The route or location of the respective vehicle may then be tracked using the positioning module 12. As far as indoor positioning or location determination is concerned, the positioning module 12 may make use of accordingly adapted acceleration sensors and determine a location or position even if a reception of radio signals from a navigation satellite is temporarily not possible, e.g. due to shadowing effects or indoor stopovers.

The base station transceiver 100 may correspond to or generate a "dummy" or "pseudo" cell and the positioning module 12 may correspond to a positioning system (GPS), which allows recording of traces of exact time vs. current geographical location. Vehicles operated by civil infrastructure suppliers may cover a large area by a fine-meshed network of geographical positions, which are headed frequently in a given period of time.

Mobile terminals 400 may detect such a pseudo pico cell and report its measured PCI to its serving macro cell base station 200, as it is illustrated in Fig. 2. Fig. 2 illustrates an embodiment attached to a bus 300 in a network scenario. Fig. 2 depicts a macro cell eNB 200, which generates three cells 201, 202, 203 using the transmit antennas 210. A bus 300 having attached thereto the above described base station transceiver 100 with the apparatus 10 moves through cell 201 and generates a moving pseudo pico cell. A mobile transceiver 400 is also located in the coverage of cell 201.The mobile transceiver 400 is served by the macro cell eNB 200.The macro cell eNB 200 is further connected to a fake base station 200, which fakes or simulates the backbone connection, such as an X2 interface, of the pseudo cell or base station transceiver 100.

In the following the measurements and the signaling in the embodiment depicted in Fig. 2 will be described. As the mobile transceiver 400 and the pseudo pico cell 100 move closer the moving pseudo cell 100 is detected for handover by the mobile transceiver 400 served by the macro cell eNB 200. The mobile transceiver 400 sends a measurement report to the macro cell eNB 200. The measurement report comprises the pseudo PCI of the pseudo cell 100. The mobile transceiver 400 triggers a message containing a request for handover, which is sent to the macro cell base station 200, and forwarded by to the (faked) base station 220 over a common backhaul link 230. In other words, the macro cell eNB 200 request handover from the fake eNB 220 as indicated or addressable by the associated PCI. Hence the fake eNB 220 is configured to be related to the pseudo pico cell 100. The fake base station 220 may then reject the request for handover, but records it together with the exact time of arrival. The fake eNB 220 may hence collect the handover events together with a time stamp.

In some embodiments, the recorded traces from the pseudo pico cell(s) 100 may be correlated with the time stamped handover requests from the fake base station 100, the exact position of the dummy base station 100 can be determined at the measured time.

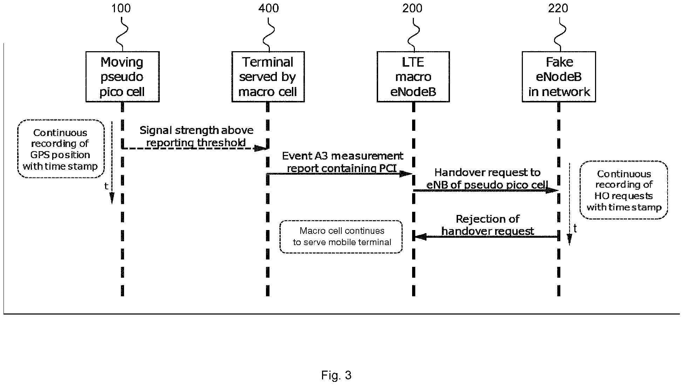

Fig. 3 illustrates a message sequence chart illustrating the signaling in an embodiment. Fig. 3 shows from the left to the right a moving pseudo cell 100, a terminal 400 or mobile transceiver 400 served by a macro cell 200, the LTE macro eNB 200, and a fake eNB 220 in the network, which is associated with the pseudo pico cell's 100 PCI. The pseudo pico cell 100 continuously records its GPS position with a corresponding time stamp. The pseudo pico cell 100 transmits radio signals that allow the mobile 400 to measure and identify the pseudo cell 100. If the signal strength of the moving pseudo pico cell is above a reporting threshold the terminal 400 reports an A3 measurement event containing the PCI to the LTE macro eNB 200. The LTE macro cell 200 then forwards a handover request to the eNB 220 of the pseudo pico cell 100, which continuously records handover requests with corresponding time stamps. The fake eNB 220 then rejects the handover request and the macro eNB 200 continues to serve the mobile transceiver 400. According to the above described embodiments, matching of the time stamps of the handover requests and the location information and evaluating the number of handovers at the respective locations may then be used to identify a promising location for deployment of a fully operational pico cell.

In some further embodiments the control module 16 may be operable to determine information related to a velocity of the base station transceiver 100. This may be achieved using the stored location information and time information. The control module 16 may be further operable to control a transmit power of the base station transceiver 100 based on the information related to the velocity of the base station transceiver 100.It is assumed that a time window, which a mobile transceiver 440 may use to measure or detect the pseudo cell 100, may depend on the velocity or speed at of the pseudo cell 100 at which it moves by. The faster it moves the shorter the time window. Increasing the transmit power of the pseudo cell 100 may increase its coverage region or cell radius. The time window may be increased with increasing transmit power. In some embodiments the control module 16 may hence be operable to adapt a corresponding time window to the speed or velocity of the base station transceiver 100.

In some further embodiments the control module 16 may be operable to activate and deactivate transmission of the base station transceiver 100 based on the information related to the location of the base station transceiver 100. In some embodiments an area or a region in which a new base station transceiver could be deployed may be predefined or known. If the moving base station transceiver 100 leaves such a region of interest it may be switched off and generation of interference by the base station transceiver 100 may be reduced or prevented outside such a region. The control module 16 may be operable to activate and deactivate transmission of the base station transceiver 100 based on information related to the time of day or day of the week. Hence, during times of low or no interest, e.g. when only low activity is to be expected, the base station transceiver 100 may be deactivated and generation of interference by the base station transceiver 100 may be reduced or prevented during such times.

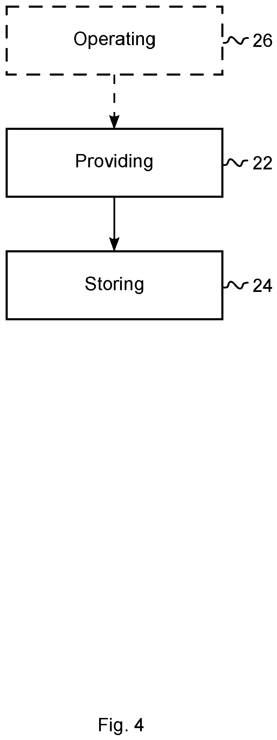

Fig. 4 illustrates a block diagram of a flow chart of an embodiment of a method for a base station transceiver100 and for determining location information of the base station transceiver 100. The base station transceiver 100 is operable to provide information related to an identification of a cell to a mobile transceiver 400. The method comprises providing 22 information related to a location of the base station transceiver 100. The method further comprises storing 24 the information related to the location of the base station transceiver 100 together with information related to a time, at which the information related to the position is obtained. In some embodiments the method further comprises operating 26 the base station transceiver at different locations, in line with the above described embodiments.

The method may further comprise storing information related to handover requests from mobile transceivers 400 requesting to handover to the base station transceiver 100 together with information related to a time or a time stamp at which the information related to a handover request was obtained. In some embodiments the method may further comprise assigning locations of the base station transceiver 100 to a number of handover requests based on the stored information related to the time or time stamp. The method may further comprise correlating locations of the base station transceiver 100 and number of handover requests based on the information relating to the time or time stamp.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

Embodiments may provide measurement results for a multitude of locations due to the moving pseudo cell. Embodiments may enhance chances to find suitable locations for a (real) pico cell deployment. Embodiments may offer a method to identify numerous well suited locations for pico cell deployment, that may prevent costly, man power and time intensive network planning and dedicated drive test campaigns. Embodiments may enable to test for numerous higher (potential) locations within an existing LTE macro cell deployment, even if supplied by other vendors, without or a reduced need for preselecting locations, time periods, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for positioning", "means for storing", "means for transmitting", "means for controlling", etc., may be provided through the use of dedicated hardware, such as "a positioner", "a storage", "a transmitter", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a mobile base station transceiver (100) comprised in or attached to a vehicle, the apparatus (10) being operable to determine location information of the mobile base station transceiver (100) tracking a route of the vehicle, the mobile base station transceiver (100) being operable to provide information related to an identification of a cell to a mobile transceiver (400), the apparatus (10) comprising
a positioning module (12) operable to provide information related to a location of the apparatus (10);
a storing module (14) operable to store data;
a control module (16) operable to store a data set using the storing module (14), the data set comprising information related to the location of the apparatus (10) from the positioning module (12) and information related to a time, at which the information related to the position of the apparatus (10) is obtained.

2. The apparatus (10) of claim 1, further comprising a transmitter module (18) operable to transmit at least one control signal to enable the mobile transceiver (400) to carry out signal quality measurements on the reference signal.

3. The apparatus (10) of claim 2, wherein the transmitter module (18) is inoperable to transmit payload data, or wherein the mobile base station transceiver (100) corresponds to a dummy base station transceiver.

4. The apparatus (10) of claim 1, wherein the cell corresponds to a small cell and wherein the mobile base station transceiver (100) comprises a coverage area, which is at least partly surrounded by a coverage area of a macro cell base station transceiver (200), wherein the control module (16) is operable to record traces of time and corresponding positions of the mobile base station transceiver (100).

5. The apparatus (10) of claim 1, wherein the control module (16) is operable to determine information related to a velocity of the mobile base station transceiver (100) and wherein the control module (16) is operable to control a transmit power of the mobile base station transceiver (100) based on the information related to the velocity of the mobile base station transceiver (100).

6. The apparatus (10) of claim 1, wherein the control module (16) is operable to activate and deactivate transmission of the mobile base station transceiver (100) based on the information related to the location of the mobile base station transceiver (100) or based on information related to the time of day or day of the week.

7. A mobile device comprising the apparatus (10) of claim 1.

8. The mobile device of claim 7, wherein the vehicle is operated by a civil infrastructure supplier.

9. A method for a mobile base station transceiver (100) being comprised in or attached to a vehicle and for determining location information of the mobile base station transceiver (100) tracking a route of the vehicle,, the mobile base station transceiver (100) providing information related to an identification of a cell to a mobile transceiver (400), the method comprising
providing (22) information related to a location of the mobile base station transceiver (100);
storing (24) the information related to the location of the mobile base station transceiver (100) together with information related to a time, at which the information related to the position is obtained.

10. The method of claim 9, further comprising operating the mobile base station transceiver (100) at different locations.

11. The method of claim 9, further comprising storing information related to handover requests from mobile transceivers (400) requesting to handover to the mobile base station transceiver (100) together with information related to a time at which the information related to a handover request was obtained.

12. The method of claim 11, further comprising assigning locations of the mobile base station transceiver (100) to a number of handover requests based on the stored information related to the time.

13. The method of claim 11, further comprising correlating locations of the mobile base station transceiver (100) and number of handover requests based on the information relating to the time.

14. A computer program having a program code for performing one of the methods of claims 10 to 13, when the computer program is executed on a computer or processor.

## Patentansprüche

1. Vorrichtung (10) für einen mobilen Basisstation-Transceiver (100), gebildet in oder angebracht an einem Fahrzeug, wobei die Vorrichtung (10) betriebsfähig ist, um Standortinformationen des mobilen Basisstation-Transceivers (100) zu bestimmen, die eine Route des Fahrzeugs verfolgen, wobei der mobile Basisstation-Transceiver (100) betriebsfähig ist, um Informationen zu einer Kennung einer Zelle an einen mobilen Transceiver (400) bereitzustellen, wobei die Vorrichtung (10) Folgendes umfasst
ein Positionierungsmodul (12), das betriebsfähig ist, um Informationen zu einem Standort der Vorrichtung (10) bereitzustellen;
ein Speichermodul (14), das betriebsfähig ist, um Daten zu speichern;
ein Steuermodul (16), das betriebsfähig ist, um unter Verwendung des Speichermoduls (14) einen Datensatz zu speichern, wobei der Datensatz Informationen zum Standort der Vorrichtung (10) von dem Positionierungsmodul (12) und Informationen zu einer Zeit umfasst, zu der die Informationen zur Position der Vorrichtung (10) erlangt wurden.

2. Vorrichtung (10) nach Anspruch 1, ferner umfassend ein Sendermodul (18), das betriebsfähig ist, um wenigstens ein Steuersignal zu übertragen, um es dem mobilen Transceiver (400) zu ermöglichen, Signalqualitätsmessungen an dem Referenzsignal auszuführen.

3. Vorrichtung (10) nach Anspruch 2, wobei das Sendermodul (18) nicht betriebsfähig ist, um Nutzdaten zu übertragen, oder wobei der mobile Basisstation-Transceiver (100) einem Dummy-Basisstation-Transceiver entspricht.

4. Vorrichtung (10) nach Anspruch 1, wobei die Zelle einer kleinen Zelle entspricht und wobei der mobile Basisstation-Transceiver (100) ein Abdeckungsgebiet umfasst, das wenigstens teilweise von einem Abdeckungsgebiet eines Makrozellen-Basisstation-Transceivers (200) umgeben ist, wobei das Steuermodul (16) betriebsfähig ist, um Zeitspuren und entsprechende Positionen des mobilen Basisstation-Transceivers (100) aufzuzeichnen.

5. Vorrichtung (10) nach Anspruch 1, wobei das Steuermodul (16) betriebsfähig ist, um Informationen zu einer Geschwindigkeit des mobilen Basisstation-Transceivers (100) zu bestimmen und wobei das Steuermodul (16) betriebsfähig ist, um eine Übertragungsleistung des mobilen Basisstation-Transceivers (100) aufbauend auf den Informationen zur Geschwindigkeit des mobilen Basisstation-Transceivers (100) zu steuern.

6. Vorrichtung (10) nach Anspruch 1, wobei das Steuermodul (16) betriebsfähig ist, um die Übertragung des mobilen Basisstation-Transceivers (100) aufbauend auf den Informationen zum Standort des mobilen Basisstation-Transceivers (100) oder aufbauend auf Informationen zur Uhrzeit oder zum Wochentag zu aktivieren und zu deaktivieren.

7. Mobilgerät, umfassend die Vorrichtung (10) nach Anspruch 1.

8. Mobilgerät nach Anspruch 7, wobei das Fahrzeug von einem Anbieter ziviler Infrastruktur betrieben wird.

9. Verfahren für einen mobilen Basisstation-Transceiver (100), der in einem Fahrzeug gebildet oder daran angebracht ist, und zum Bestimmen von Standortinformationen des mobilen Basisstation-Transceivers (100), die eine Route des Fahrzeugs verfolgen, wobei der mobile Basisstation-Transceiver (100) Informationen zu einer Kennung einer Zelle an einen mobilen Transceiver (400) bereitstellt, wobei das Verfahren Folgendes umfasst
Bereitstellen (22) von Informationen zu einem Standort des mobilen Basisstation-Transceivers (100);
Speichern (24) der Informationen zum Standort des mobilen Basisstation-Transceivers (100) zusammen mit Informationen zu einer Zeit, zu der die Informationen zur Position erlangt wurden.

10. Verfahren nach Anspruch 9, ferner umfassend Betreiben des mobilen Basisstation-Transceivers (100) an unterschiedlichen Standorten.

11. Verfahren nach Anspruch 9, ferner umfassend Speichern von Informationen zu Übergabeanforderungen von mobilen Transceivern (400), die eine Übergabe an den mobilen Basisstation-Transceiver (100) anfordern, zusammen mit Informationen zu einer Zeit, zu der die Informationen zu einer Übergabeanforderung erlangt wurden.

12. Verfahren nach Anspruch 11, ferner umfassend Zuweisen von Standorten des mobilen Basisstation-Transceivers (100) zu einer Anzahl von Übergabeanforderungen aufbauend auf den gespeicherten Informationen zu dieser Zeit.

13. Verfahren nach Anspruch 11, ferner umfassend Korrelieren von Standorten des mobilen Basisstation-Transceivers (100) und einer Anzahl von Übergabeanforderungen aufbauend auf den gespeicherten Informationen zur Zeit.

14. Computerprogramm, das Programmcode zum Durchführen eines der Verfahren nach den Ansprüchen 10 bis 13 aufweist, wenn das Computerprogramm auf einem Computer oder Prozessor ausgeführt wird.

## Revendications

1. Appareil (10) destiné à un émetteur-récepteur de station de base mobile (100) compris dans ou fixé à un véhicule, l'appareil (10) permettant de déterminer des informations de localisation de l'émetteur-récepteur de station de base mobile (100) suivant le trajet du véhicule, l'émetteur-récepteur de station de base mobile (100) permettant de fournir des informations relatives à l'identification d'une cellule à un émetteur-récepteur mobile (400), l'appareil (10) comprenant :
un module de positionnement (12) permettant de fournir des informations relatives à une localisation de l'appareil (10) ;
un module de stockage (14) permettant de stocker des données ;
un module de commande (16) permettant de stocker un jeu de données à l'aide du module de stockage (14), le jeu de données comprenant des informations relatives à la localisation de l'appareil (10) provenant du module de positionnement (12) et des informations relatives à un moment, auquel les informations relatives à la position de l'appareil (10) sont obtenues.

2. Appareil (10) selon la revendication 1, comprenant en outre un module émetteur (18) permettant de transmettre au moins un signal de commande pour permettre à l'émetteur-récepteur mobile (400) de réaliser des mesures de qualité du signal sur le signal de référence.

3. Appareil (10) selon la revendication 2, dans lequel le module émetteur (18) ne permet pas de transmettre de données de charge utile, ou dans lequel l'émetteur-récepteur de station de base mobile (100) correspond à un pseudo émetteur-récepteur de station de base.

4. Appareil (10) selon la revendication 1, dans lequel la cellule correspond à une petite cellule et dans lequel l'émetteur-récepteur de station de base mobile (100) comporte une zone de couverture, qui est au moins en partie entourée par une zone de couverture d'un émetteur-récepteur de station de base de macrocellule (200), dans lequel le module de commande (16) permet d'enregistrer des traces du temps et des positions correspondantes de l'émetteur-récepteur de station de base mobile (100).

5. Appareil (10) selon la revendication 1, dans lequel le module de commande (16) permet de déterminer des informations relatives à la vitesse de l'émetteur-récepteur de station de base mobile (100) et dans lequel le module de commande (16) permet de commander la puissance de transmission de l'émetteur-récepteur de station de base mobile (100) d'après les informations relatives à la vitesse de l'émetteur-récepteur de station de base mobile (100).

6. Appareil (10) selon la revendication 1, dans lequel le module de commande (16) permet d'activer ou de désactiver la transmission de l'émetteur-récepteur de station de base mobile (100) d'après les informations relatives à la localisation de l'émetteur-récepteur de station de base mobile (100) ou d'après les informations relatives à l'heure du jour ou au jour de la semaine.

7. Dispositif mobile comprenant l'appareil (10) selon la revendication 1.

8. Dispositif mobile selon la revendication 7, dans lequel le véhicule est exploité par un opérateur d'infrastructure civile.

9. Procédé destiné à un émetteur-récepteur de station de base mobile (100) qui est compris dans ou fixé à un véhicule et destiné à déterminer des informations de localisation de l'émetteur-récepteur de station de base mobile (100) suivant le trajet du véhicule, l'émetteur-récepteur de station de base mobile (100) fournissant des informations relatives à l'identification d'une cellule à un émetteur-récepteur mobile (400), le procédé comprenant les étapes suivantes :
fournir (22) des informations relatives à une localisation de l'émetteur-récepteur de station de base mobile (100) ;
stocker (24) les informations relatives à la localisation de l'émetteur-récepteur de station de base mobile (100) en même temps que les informations relatives à un moment, auquel les informations relatives à la position sont obtenues.

10. Procédé selon la revendication 9, comprenant en outre l'exploitation de l'émetteur-récepteur de station de base mobile (100) à différentes localisations.

11. Procédé selon la revendication 9, comprenant en outre le stockage des informations relatives aux demandes de transfert intercellulaire provenant d'émetteurs-récepteurs mobiles (400) demandant d'effectuer un transfert intercellulaire vers l'émetteur-récepteur de station de base mobile (100) en même temps que les informations relatives à un moment auquel les informations relatives à une demande de transfert intercellulaire ont été obtenues.

12. Procédé selon la revendication 11, comprenant en outre l'affectation de localisations de l'émetteur-récepteur de station de base mobile (100) à un nombre de demandes de transfert intercellulaire d'après les informations stockées relatives au temps.

13. Procédé selon la revendication 11, comprenant en outre la corrélation des localisations de l'émetteur-récepteur de station de base mobile (100) et du nombre de demandes de transfert intercellulaire d'après les informations relatives au temps.

14. Programme informatique comportant un code de programme destiné à mettre en oeuvre l'un des procédés selon les revendications 10 à 13, lorsque le programme informatique est exécuté sur un ordinateur ou un processeur.
